# EUROPEAN PATENT SPECIFICATION

(11) **EP 3 256 711 B1**
(45) Date of publication and mention of the grant of the patent: **09.09.2020**
(21) Application number: 15881879.9
(22) Date of filing: 03.07.2015
(51) Int. Cl.: F02K 9/18

(54) **PROPELLANT GRAIN FOR A SOLID ROCKET MOTOR**
TREIBMITTELKÖRNER FÜR EINEN FESTTREIBSTOFFRAKETENMOTOR
BLOC DE POUDRE POUR UN MOTEUR DE FUSÉE À POUDRE

(30) Priority: 12.02.2015 IN 407DE2015
(43) Date of publication of application: 20.12.2017
(73) Proprietor: Chairman, Defence Research & Development Organisation (DRDO), New Delhi 110011 (IN)
(72) Inventor: KRISHNAN, Anish, Bala, Hyderabad Telangana 500058 (IN); MANICKAVASAGAM, Marudhanayagam, Hyderabad Telangana 500058 (IN); GNANASEKARAN, Venkataswamy, Hyderabad Telangana 500058 (IN)
(74) Representative: Wynne-Jones IP Limited
(86) International application number: PCT/IB2015/055027
(87) International publication number: WO 2016/128804

(56) References cited:
- RU-U1- 17 715
- US-A- 2 920 443
- US-H- H1 082
- US-H- H1 082

## Description

### FIELD OF THE INVENTION

The present disclosure primarily relates to solid rocket motors, more particularly, to propellant grain configuration for use in solid rocket motors.

### BACKGROUND

To meet increasingly demanding performance requirements from solid rocket motors, new propellant grain configurations are conceived. Many factors contribute towards building a high performance solid rocket motor. Two of the geometric factors are high 'propellant volumetric loading density' and flexibility to tailor 'grain regression pattern' to deliver different mission-specific thrust profiles. Conventionally grain designers have used a variety of grain configurations viz. star, finocyl and conocyl, to name a few, with varying degrees of relative merits, to meet different requirements. Among them, finocyl is a versatile grain configuration that allows for high loading density as well as thrust tailoring flexibility. A finocyl grain configuration comprises of an axial cavity surrounded by longitudinal fin cavities in cyclic symmetry. By altering the size, shape, location and number of fin, finocyl grains can be configured for a variety of thrust profiles.

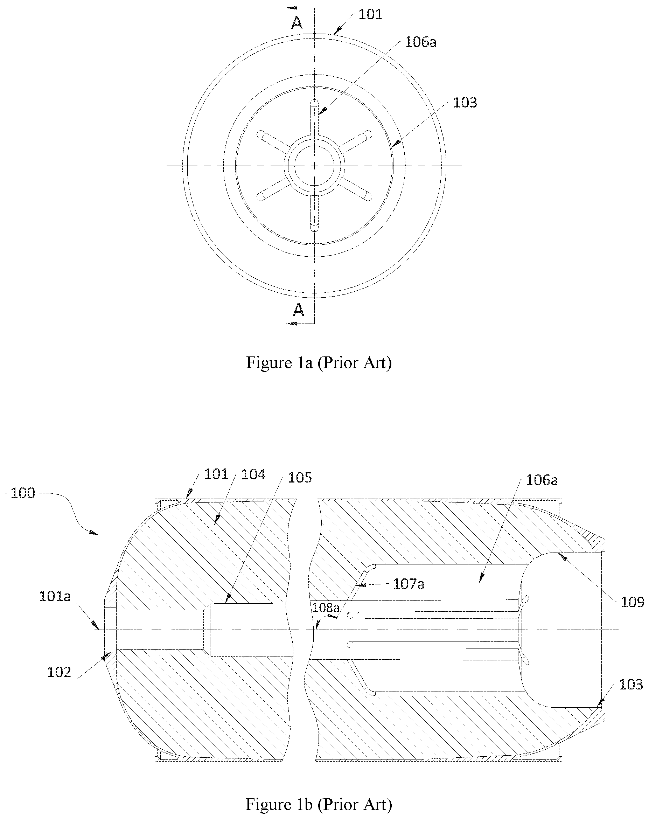

**Figure 1a** & **1b** show the aft-end view and longitudinal sectional view respectively of a monolithic solid rocket motor with conventional shallow finocyl grain as in prior art. When the largest imaginary circle circumscribing the fin tips is smaller than the largest motor aperture, it is called shallow finocyl grain. The rocket motor **100** comprises an internally insulated motor casing **101** with apertures **102** and **103** at the front end (alternatively referred to as fore-end) and rear end (alternatively referred to as aft-end) respectively. Generally fore-end aperture is smaller than aft-end aperture. In a typical rocket motor, an igniter (not shown) closes the fore-end aperture **102**; a nozzle (not shown) closes the aft-end aperture **103.** The rocket motor **100** further comprises propellant grain **104** with an axial cavity **105** and number of shallow fin **106a** having reverse-swept leading edges **107a.** When the leading edge **107a** makes an obtuse angle **108a** with the forward motor axis **101a,** the fin are called reverse-swept. The propellant grain **104** further comprises a counter-bore **109** at the aft-end to accommodate a submerged nozzle (not shown) of the rocket motor **100.**

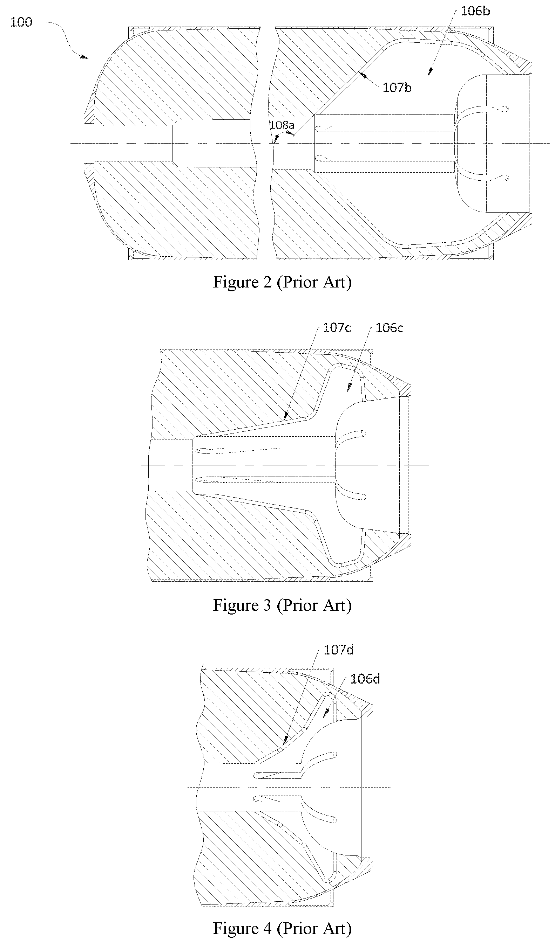

**Figure 2** shows the longitudinal section view of a rocket motor with conventional deep finocyl grain as in prior art. Since the largest imaginary circle circumscribing the fin tips is bigger than the largest motor aperture **102**, it is called deep finocyl grain. The deep fin **106b** is once again reverse-swept.

**Figures 3 & 4** show longitudinal section view of rocket motors with yet other conventional deep finocyl grains. In either case the leading edges **107c & 107d** of fin **106c** and **106d** respectively are swept backward - characteristic of conventional finocyl grains.

Few of the prior inventions dealing with conventional finocyl grains follow.

A finocyl grain disclosed in US 000001082H (Andrew) describes a configuration used in large monolithic boosters. The aft-end located fin is dissimilar but their leading edges are swept backwards as in any conventional finocyl grain.

Another finocyl grain disclosed in US 4,936,092 (Andrew) depicts a compact, monolithic grain configuration with deep fin cavities at the aft-end of the motor. Again the leading edges of the fin are reverse-swept.

Yet another finocyl grain disclosed in US 4,148,187 (Younkin) relates to a multi-piece grain configuration for modulated thrust profiles. Illustrating figures show typical finocyl grains with reverse-swept fin leading edges.

Prior art includes RU 17 715 U1 (2001-04-20) [ABSTRACT]: "A ballistic missile main-stage solid-propellant rocket motor; including a propellant grain configuration tailored to provide required missile ballistic performance, having a center bore, major and minor rear fin slots, and a silver eliminator bore enlargement; utilizing a forward pressure equalizing flap; and designed to accommodate sever operating conditions."

Prior art includes US H 1082 H (1992-08-04) [ABSTRACT]: "The change of solid propellant fuel with an axial cylindrical channel and longitudinal slots made on a part of the charge, characterized in that the length of each slit at the apex of the slit is larger than the slit length in the base by an amount exceeding half the height of the slit, and the number of slots is not more than 8."

### SUMMARY

The present disclosure relates to a solid rocket motor. The rocket motor comprises an internally insulated cylindrical casing with end domes having centrally located apertures at fore-end and aft-end. The rocket motor further comprises a solid propellant grain filled within the casing. The grain comprises an axial through-bore running from fore-end to aft-end along the axis of the rocket motor. The grain further comprises a plurality of longitudinal fin cavities formed in a circular array around the said axial through-bore at the aft-end of the rocket motor. Each of the plurality of longitudinal hollow fin cavities extends radially outwards with forward-swept leading edge and trailing edge. The plurality of longitudinal fin cavities is disposed such that an acute angular dimension made by the leading edge with forward motor axis is greater than an angular dimension made by the trailing edge with the forward motor axis.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The features of the present disclosure will become more fully apparent from the following description and appended claims, taken in conjunction with the accompanying drawings. Understanding that these drawings depict only several embodiments in accordance with the disclosure and are therefore, not to be considered limiting of its scope. The disclosure will be described with additional specificity and detail through use of the accompanying drawings.
**Figures 1a & 1b** illustrate aft-end view and longitudinal sectional view (along section A-A) respectively of a conventional monolithic rocket motor with conventional shallow finocyl grain in accordance with the Prior Art;
**Figures 2, 3 & 4** illustrate longitudinal sectional view of rocket motors with different conventional deep finocyl grain configurations in accordance with the Prior Art;
**Figures 5a & 5b** illustrate longitudinal view and cross-sectional view (along section B-B) respectively of an exemplary solid rocket motor propellant grain configuration in accordance with an embodiment of the present disclosure;
**Figures 6, 7 & 8** show longitudinal sectional views of exemplary embodiments of the propellant grain with different geometry of forward-swept fin in accordance with some embodiments of the present disclosure;
**Figures 9 & 10** illustrate the longitudinal and cross-sectional views (along section C-C) respectively of dissimilar forward-swept fin cavities in accordance with an embodiment of the present disclosure;
**Figures 11 & 12** graphical representations of exemplary rocket motor chamber pressure versus time profiles achieved by the grain configuration in accordance with some embodiments of the present disclosure;

The figures depict embodiments of the disclosure for purposes of illustration only. One skilled in the art will readily recognize from the following description that alternative embodiments of the structures and methods illustrated herein may be employed without departing from the principles of the disclosure described herein.

### DETAILED DESCRIPTION

While the invention is susceptible to various modifications and alternative forms, specific embodiment thereof has been shown by way of example in the drawings and will be described in detail below. It should be understood, however that it is not intended to limit the invention to the particular forms disclosed, but on the contrary, the invention is to cover all modifications, equivalents, and alternative falling within the scope of the the appended claims.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made if they fall within the scope of the invention as defined by the appended claims. The following description is, therefore, not to be taken in a limiting sense. It will be readily understood that the aspects of the present disclosure, as generally described herein, and illustrated in the figures, can be arranged, substituted, combined, and designed in a wide variety of different configurations, all of which are explicitly contemplated if they fall within the scope of the present invention as defined by the appended claims.

The present disclosure relates to a propellant grain configuration in rocket motors. In one embodiment, the coaxial, case-bonded, monolithic solid rocket propellant grain comprises a plurality of forward-swept, deep, longitudinal fin cavities circular-patterned about an axial conical and/or cylindrical cavity. It provides significant flexibility in thrust profile tailoring as well as high volumetric loading density.

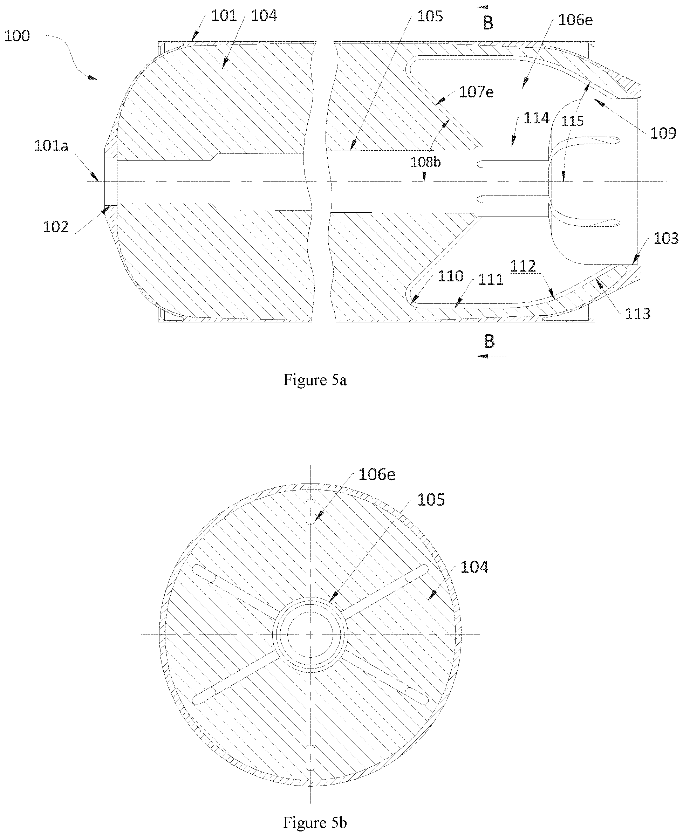

**Figures 5a & 5b** illustrate show the longitudinal view and cross sectional view (along section B-B) of an exemplary solid propellant rocket motor loaded with propellant grain configuration in accordance with one embodiment of the present disclosure; As illustrated in **Figure 5a****,** the solid propellant rocket motor (hereinafter referred to as rocket motor) **100** may be a monolithic rocket motor with grain configuration **104** bonded to the casing 101 of the rocket motor **100.**

In one embodiment, the rocket motor **100** comprises a hollow casing **101** with fore-end **102** and aft-end **103** apertures. In one example, the fore-end aperture **102** may be smaller than the aft-end aperture **103.** The casing **101** may be a cylindrical structure with convex end domes and internally insulated with a suitable insulating material. The propellant grain **104** may be cast inside the casing **101** and cured to final shape or machined to final shape. The rocket motor **100** further comprises an igniter (not shown) at the fore-end aperture **102** and a nozzle (not shown) at the aft-end aperture **103.**

In one embodiment, the propellant grain **104** comprises the cylindrical cavity or axial through-bore **105** along the longitudinal axis **101a** running from the fore-end aperture **102** to the aft-end aperture **103** of the rocket motor **100.** In another embodiment, the propellant grain comprises a blind axial cavity opening towards the aft-end aperture. The shape of the central cavity or the blind axial cavity may be at least one of conical, cylindrical or combination of conical and cylindrical shapes. The propellant grain **104** further comprises the plurality of longitudinal hollow fin cavities (hereinafter referred to as "fin") **106e.** The fin **106e** is circular-patterned about the longitudinal axis **101a** and located near the aft-end aperture 103. The propellant grain **104** further comprises the counter-bore **109** near the aft-end aperture **103** to accommodate the submerged nozzle (not shown) of the rocket motor **100.**

As shown in **Figure 5a**, the fin **106e** is formed by forward-swept leading edges **107e**, small fillet radii **110**, fin tip-chord **111**, forward-swept trailing edges **112**, large fillet radii **113** and fin root-chord **114.**

In one embodiment, the fin **106** is configured with their leading edges (107) making an acute angle at least one of completely **107e**, **107i**, partly **107f**, **107g** and tangentially **107h** with the forward motor axis **101a.** The fin **106e** is configured such that the acute angular dimension 108b made by the leading edge 107 with forward motor axis **101a** is greater than the angular dimension **115** made by the trailing edge **111** with the forward motor axis **101a.** The angular dimensions **108b, 115** made the by leading edge **107e** and traili plurality of longitudinal fin cavities ng edge **111** respectively with the forward motor axis **101a** is acute (less than 90 degrees) and hence the leading and trailing edges of the fin are termed forward-swept.

The fin **106e** is configured with increasing thickness from the tip to root and the maximum size of the fin **106e** related to the diameter of the counter-bore **109** and aft-end aperture **103.** In one embodiment, the maximum size of the fin **106e** is determined such that the diameter of the largest circle inscribed on radial side of the fin **106e** is lesser than the diameter of the counter-bore **109** and the aft-end aperture **103** in the motor casing **101.** In other embodiment, the forward-swept leading edge **107e** of the plurality of fin **106e** is configured to form one or more acute angular dimensions with the forward motor axis **101a.** The tip-chord 111 is configured to run parallel to local casing insulation.

**Figure 5b** illustrates distribution of the fin **106e** in propellant grain **104** around the central cavity **105.** The extent of radial depth of fin **106e** is illustrated in Figure 5b. The fin **106e** is configured with circular tips. Further, the fin **106e** is disposed about the axial through-bore **105** such that the diameter of the largest imaginary circle circumscribing the tips of the fin **106e** is greater than the diameter of the aft-end aperture **103** in motor casing **101** and lesser than the inner diameter of the motor casing **101.**

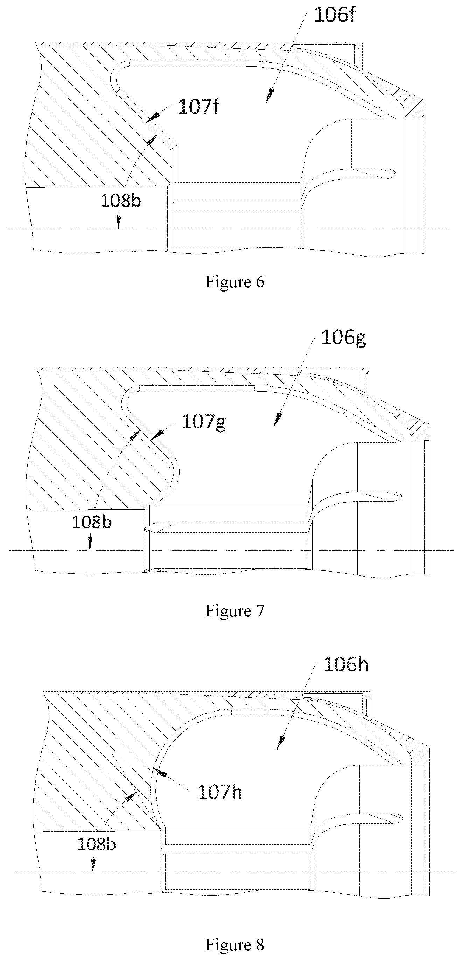

**Figure 6** illustrates an exemplary embodiment of fin geometry where the forward-swept leading edge **107f** of the fin **106f** is at least partially perpendicular to the motor axis **101a.**

In another embodiment, as shown in **Figure 7**, the inner part of the forward-swept leading edge **107e** is reverse swept.

Also as illustrated in **Figure 8**, in yet another embodiment, the leading edge **107h** is part of an arc with the tangent at the starting point of the fin **106h** forming acute angle **114** with the forward motor axis.

In one embodiment, the forward-swept leading edge **107e** is configured to form one or more angular dimensions with the motor axis **101a** including single, double or triple delta fin.

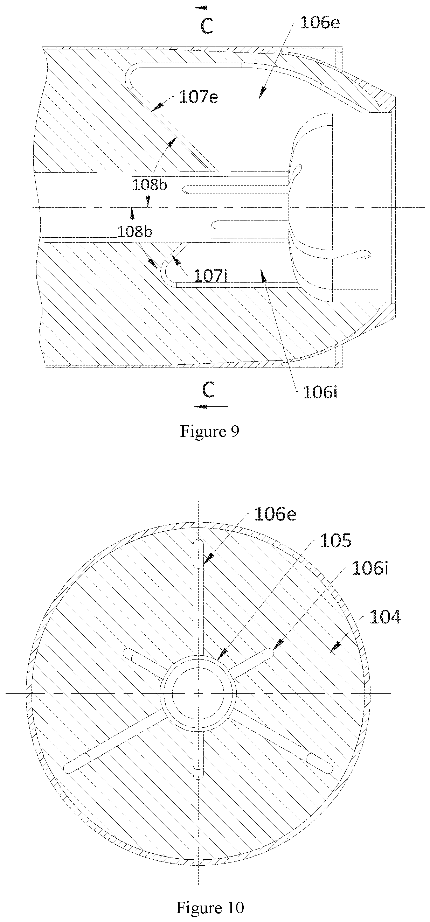

**Figures 9 & 10** illustrate longitudinal and cross sectional views of yet another embodiment where the circular patterned fin are dissimilar in dimensions. Alternate forward-swept fin are similar. Fin **106e** and **106i** differ in their radial depth among other dimensions.

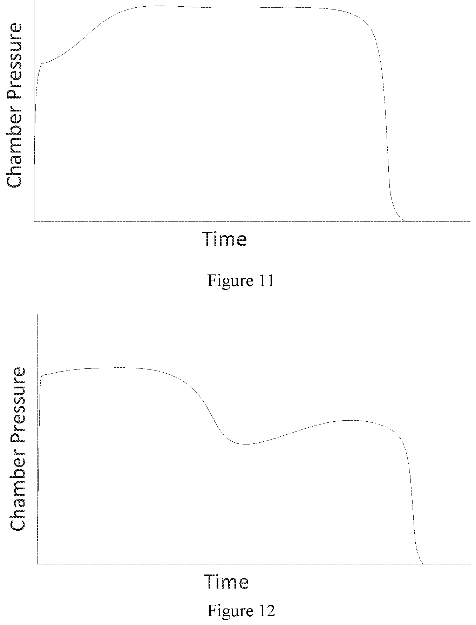

**Figures 11 & 12** illustrate two of the many possible rocket motor chamber pressure profiles generated by different embodiments of the current invention. **Figure 11** shows a 'progressive - neutral' type of 'chamber pressure vs. time' plot where the initial lower pressure ensures less loads on the thick propellant grain. An 'M-type' chamber pressure vs. time plot is shown in **Figure 12****.** The dip in pressure level is usually synchronized with maximum atmospheric loads in case of launch vehicles.

### ADVANTAGES OF THE PRESENT INVENTION

In one embodiment, the present disclosure relates to propellant grain configuration having a plurality of deep longitudinal fin cavities with forward-swept leading edges circular patterned about an axial cavity. The grain configuration provides flexibility to tailor burn surface area regression profiles to meet different performance requirements.

Further, being a finocyl grain configuration it enables high propellant volumetric loading density enabling a compact rocket motor.

### Reference numerals used in the present invention

100 - Rocket motor
101 - Motor casing
101a - Motor axis
102 - Fore-end aperture
103 - Aft-end aperture
104 - Solid Propellant grain
105 - Axial through-bore
106a, 106b, 106c, 106d, 106e, 106f, 106g, 106h, 106i -Fin
107a, 107b, 107c, 107d, 107e, 107f, 107g, 107h, 107i -Leading edge
108a - Angular dimension between the leading edge and forward motor axis
109 - Counter-bore in Propellant grain
110 - Small fillet radii of fin
111 - Fin tip-chord
112 - Trailing edge of fin
113 - Large fillet radii of fin
114 - Fin root-chord
108b - Angular dimension between fin leading edge and forward motor axis
115- Angular dimension between fin trailing edge and forward motor axis

The foregoing detailed description has described only a few of the many possible implementations of the present invention. While considerable emphasis has been placed herein on the particular features of this invention, it will be appreciated that various modifications can be made, and that many changes can be made in the preferred embodiments as long as those changes fall within the scope of the invention as defined by the appended claims. These and other modifications in the nature of the invention or the preferred embodiments will be apparent to those skilled in the art from the disclosure herein, whereby it is to be distinctly understood that the foregoing descriptive matter is to be interpreted merely as illustrative of the invention and not as a limitation.

## Claims

1. A rocket motor (100), the rocket motor comprising:
an internally insulated cylindrical casing (101) with end domes having centrally located apertures at fore-end (102) and aft-end (103);
a solid propellant grain (104) filled within the casing (101), comprising:
an axial through-bore (105) running from fore-end (102) to aft-end (103) along the axis (101a) of the rocket motor (100); and
a plurality of longitudinal fin cavities (106e) circular patterned about the axial through-bore (105),
wherein the plurality of longitudinal fin cavities (106e) extend radially outward with forward-swept leading edge (107) and trailing edge (111) and wherein, the plurality of longitudinal fin cavities (106e) is disposed such that an acute angular dimension (108b) made by the leading edge (107) with forward motor axis (101a) is greater than an angular dimension (115) made by the trailing edge (111) with the forward motor axis (101a).

2. The rocket motor as claimed in claim 1, wherein the solid propellant grain (104) further comprises a counter-bore (109) at the aft-end (103) of the rocket motor (100).

3. The rocket motor as claimed in claim 1, wherein the plurality of longitudinal fin cavities (106e) is configured with their leading edges (107) making an acute angle at least one of completely (107e, 107i), partly (107f, 107g) and tangentially (107h) with the forward motor axis (101a).

4. The rocket motor as claimed in claim 1, wherein the plurality of longitudinal fin cavities (106e, 106i) disposed about the axial through-bore (105) are dissimilar.

5. The rocket motor as claimed in claim 1, wherein the plurality of longitudinal fin cavities (106e) is disposed about the axial through-bore (105) such that the diameter of the largest imaginary circle circumscribing the tips of the fin (106e) is greater than the diameter of the aft-end aperture (103) in motor casing (101) and lesser than the inner diameter of the motor casing (101).

6. The rocket motor as claimed in claim 1, wherein the plurality of longitudinal hollow fin (106e) is configured with increasing thickness from the tip-chord (111) to root of the longitudinal fin cavities (106e).

7. The rocket motor as claimed in claim 1, wherein maximum size of the plurality of longitudinal fin cavities (106e) is such that the diameter of the largest circle inscribed on radial side of the fin (106e) is lesser than the diameter of the counter-bore (109) and the aft-end aperture (103) in the motor casing (101).

8. The propellant grain as claimed in claim 1, wherein the forward-swept leading edge (107) of the plurality of longitudinal fin cavities (106e) is configured to form one or more acute angular dimensions with the forward motor axis (101a).

## Patentansprüche

1. Raketenmotor (100), der Raketenmotor umfassend:
ein intern isoliertes zylindrisches Gehäuse (101) mit Endkappen, das mittig liegende Durchlässe am vorderen Ende (102) und hinteren Ende (103) aufweist;
einen Festtreibstoffblock (104), der innerhalb des Gehäuses (101) gefüllt ist, umfassend:
eine axiale Durchgangsbohrung (105), die von dem vorderen Ende (102) zu dem hinteren Ende (103) entlang der Achse (101a) des Raketenmotors (100) verläuft; und
eine Vielzahl von längsläufigen Rippenhohlräumen (106e), die um die axiale Durchgangsbohrung (105) kreisförmig gestaltet sind,
wobei sich die Vielzahl von längsläufigen Rippenhohlräumen (106e) radial auswärts mit vorwärtsgerichteter Vorderkante (107) und Hinterkante (111) erstreckt und wobei die Vielzahl von längsläufigen Rippenhohlräumen (106e) so angeordnet ist, dass ein durch die Vorderkante (107) mit der Vorwärtsmotorachse (101a) hergestelltes Spitzwinkelmaß (108b) größer als ein durch die Hinterkante (111) mit der Vorwärtsmotorachse (101a) hergestelltes Winkelmaß (115) ist.

2. Raketenmotor nach Anspruch 1, wobei der Festtreibstoffblock (104) ferner eine Senkbohrung (109) am vorderen Ende (103) des Raketenmotors (100) umfasst.

3. Raketenmotor nach Anspruch 1, wobei die Vielzahl von längsläufigen Rippenhohlräumen (106e) mit ihren Vorderkanten (107) so konfiguriert ist, dass diese einen Spitzwinkel von mindestens einem von vollständig (107e, 107i), teilweise (107f, 107g) und tangential (107h) mit der Vorwärtsmotorachse (101a) herstellen.

4. Raketenmotor nach Anspruch 1, wobei die Vielzahl von längsläufigen Rippenhohlräumen (106e, 106i), die um die axiale Durchgangsbohrung (105) angeordnet sind, unähnlich sind.

5. Raketenmotor nach Anspruch 1, wobei die Vielzahl von längsläufigen Rippenhohlräumen (106e) um die axiale Durchgangsbohrung (105) so angeordnet ist, dass der Durchmesser des größten imaginären Kreises, der die Spitzen der Rippe (106e) umschreibt, größer als der Durchmesser des Hinterkantendurchlasses (103) in dem Motorgehäuse (101) und kleiner als der Innendurchmesser des Motorgehäuses (101) ist.

6. Raketenmotor nach Anspruch 1, wobei die Vielzahl von längsläufigen Hohlrippen (106e) mit zunehmender Dicke von Spitzensehne (111) zur Wurzel der längsläufigen Rippenhohlräume (106e) konfiguriert ist.

7. Raketenmotor nach Anspruch 1, wobei die maximale Größe der Vielzahl von längsläufigen Rippenhohlräumen (106e) derart ist, dass der Durchmesser des größten Kreises, der auf der radialen Seite der Rippe (106e) eingeschrieben ist, kleiner als der Durchmesser der Senkbohrung (109) und des Hinterkantendurchlasses (103) in dem Motorgehäuse (101) ist.

8. Treibstoffblock nach Anspruch 1, wobei die vorwärtsgerichtete Vorderkante (107) der Vielzahl von längsläufigen Rippenhohlräumen (106e) konfiguriert ist, um ein oder mehrere Spitzwinkelmaße mit der Vorwärtsmotorachse (101a) zu bilden.

## Revendications

1. Moteur de fusée (100), le moteur de fusée comprenant :
un corps cylindrique isolé intérieurement (101) avec des dômes polaires ayant des ouvertures centrales au niveau de l'extrémité avant (102) et de l'extrémité arrière (103) ;
un bloc de propergol solide (104) remplissant le corps (101) et comprenant :
un alésage débouchant axial (105) s'étendant de l'extrémité avant (102) à l'extrémité arrière (103) le long de l'axe (101a) du moteur de fusée (100) ; et
une pluralité de cavités d'ailette longitudinales (106e) modelées circulaires autour de l'alésage débouchant axial (105),
la pluralité de cavités d'ailette longitudinales (106e) s'étendant radialement vers l'extérieur avec le bord d'attaque (107) et le bord de fuite (111) en flèche négative, et la pluralité de cavités d'ailette longitudinales (106e) étant disposées de sorte qu'une dimension angulaire aiguë (108b) produite par le bord d'attaque (107) avec un axe de moteur avant (101a) soit supérieure à une dimension angulaire (115) produite par le bord de fuite (111) avec l'axe de moteur avant (101a).

2. Moteur de fusée selon la revendication 1, dans lequel le bloc de propergol solide (104) comprend en outre un contre-alésage (109) au niveau de l'extrémité arrière (103) du moteur de fusée (100).

3. Moteur de fusée selon la revendication 1, dans lequel la pluralité de cavités d'ailette longitudinales (106e) sont configurées avec leurs bords d'attaque (107) produisant complètement (107e, 107i) et/ou partiellement (107f, 107g) et/ou tangentiellement (107h) un angle aigu avec l'axe de moteur avant (101a).

4. Moteur de fusée selon la revendication 1, dans lequel la pluralité de cavités d'ailette longitudinales (106e, 106i) disposées autour de l'alésage débouchant axial (105) sont dissemblables.

5. Moteur de fusée selon la revendication 1, dans lequel la pluralité de cavités d'ailette longitudinales (106e) sont disposées autour de l'alésage débouchant axial (105) de sorte que le diamètre du plus grand cercle imaginaire délimitant les pointes de l'ailette (106e) soit supérieur au diamètre de l'ouverture d'extrémité arrière (103) dans le corps de moteur (101) et inférieur au diamètre interne du corps de moteur (101).

6. Moteur de fusée selon la revendication 1, dans lequel la pluralité d'ailettes creuses longitudinales (106e) sont configurées avec une épaisseur croissante de la corde de pointe (111) à la racine des cavités d'ailette longitudinales (106e).

7. Moteur de fusée selon la revendication 1, dans lequel la taille maximale de la pluralité de cavités d'ailette longitudinales (106e) est telle que le diamètre du plus grand cercle inscrit sur un côté radial de l'ailette (106e) est inférieur au diamètre du contre-alésage (109) et de l'ouverture d'extrémité arrière (103) dans le corps de moteur (101).

8. Bloc de propergol selon la revendication 1, dans lequel le bord d'attaque en flèche négative (107) de la pluralité de cavités d'ailette longitudinales (106e) est configuré pour former une ou plusieurs dimensions angulaires aiguës avec l'axe de moteur avant (101a).
